# FASCICULE DE BREVET EUROPEEN

(11) **EP 3 007 105 B1**
(45) Date de publication et mention de la délivrance du brevet: **02.12.2020**
(21) Numéro de dépôt: 15188820.3
(22) Date de dépôt: 07.10.2015
(51) Int. Cl.: G06T 7/11, G06K 9/32, G06K 9/20, G06K 9/36, G06K 9/00

(54) **PROCÉDÉ D'IDENTIFICATION D'UN SIGNE SUR UN DOCUMENT DÉFORMÉ**
IDENTIFIZIERUNGSVERFAHREN EINES ZEICHENS AUF EINEM DEFORMIERTEN DOKUMENT
METHOD FOR IDENTIFYING A SIGN ON A DEFORMED DOCUMENT

(30) Priorité: 10.10.2014 FR 1459742
(43) Date de publication de la demande: 13.04.2016
(73) Titulaire: Idemia Identity & Security France, 92400 Courbevoie (FR)
(72) Inventeur: ROUH, Alain, 92130 Issy-les-Moulineaux (FR); BEAUDET, Jean, 92130 Issy-les-Moulineaux (FR); ROSTAING, Laurent, 92130 Issy-les-Moulineaux (FR)
(74) Mandataire: Regimbeau

(56) Documents cités:
- WO-A1-01/05140
- WO-A1-2006/130012
- US-A- 5 940 534
- US-A1- 2010 239 118
- US-A1- 2014 247 470
- US-B2- 8 345 979
- SEONG-WHAN LEE ET AL: "Nonlinear shape restoration of distorted images with Coons transformation", DOCUMENT ANALYSIS AND RECOGNITION, 1995., PROCEEDINGS OF THE THIRD INT ERNATIONAL CONFERENCE ON MONTREAL, QUE., CANADA 14-16 AUG. 1995, LOS ALAMITOS, CA, USA,IEEE COMPUT. SOC, US, vol. 1, 14 août 1995 (1995-08-14), pages 235-238, XP010230925, DOI: 10.1109/ICDAR.1995.598984 ISBN: 978-0-8186-7128-9

## Description

### DOMAINE TECHNIQUE GENERAL

La présente invention concerne le domaine de la détection et l'identification de signes. Plus précisément, elle concerne un procédé d'identification d'au moins un signe sur une ou plusieurs images d'un document éventuellement déformé, en particulier sur un ticket de jeu tel qu'un ticket de loterie.

### ETAT DE LA TECHNIQUE

De nombreuses procédures existantes peuvent utiliser des documents comprenant des cases à remplir ou à cocher pour interroger une personne, par exemple pour lui faire remplir un formulaire, répondre à des questions d'examen, ou encore pour lui permettre de participer à un jeu tel qu'une loterie. Des procédés ont ainsi été proposés afin de détecter et d'identifier la position et le contenu de signes, tels que des cases, sur un document soumis par un utilisateur à une lecture automatisée. Nombre de ces procédés, tels que ceux divulgués par les demandes de brevet US5140139 ou US2008/0311551 utilisent des techniques d'OCR (« Optical Character Récognition ») ou d'OMR (« Optical Mark Récognition ») afin de retrouver la position d'une case dans le document à partir d'un modèle de document et de déterminer le contenu d'une telle case. De tels procédés sont capables de prendre en compte un certain aléa dans le positionnement du document soumis par rapport au modèle de document connu, tel qu'une rotation ou un agrandissement. Ces procédés sont par contre sensibles à d'éventuelles déformations du document soumis, telles qu'un pliage ou un froissement, qui sont susceptibles de faire varier la position relative des cases à détecter les unes par rapport aux autres. Des systèmes ont ainsi été proposés comprenant un dispositif permettant de réaliser un défroissage mécanique du document avant son traitement. De tels dispositifs sont efficaces mais sont généralement complexes, encombrants et augmentent sensiblement le coût des systèmes de lectures. Ils peuvent également complexifier l'utilisation du système, par exemple en introduisant un risque de bourrage papier dans le dispositif de défroissage, et ne permettent pas de capturer une image du document à distance, sans l'insérer dans le système de lecture.

Afin de palier à ces inconvénients certains procédés, tels que celui décrit dans la demande de brevet EP 2713315, proposent de détecter les signes d'un document par appariement de masque (« template matching »). Les images de signes de faibles dimensions tels qu'une case ou une portion de case, préenregistrées à partir d'un modèle de document, sont recherchées dans une image du document soumis. La ressemblance d'une zone de l'image du document avec des images de signes préenregistrées est estimée par un calcul de corrélation. De tels procédés sont moins sensibles que les procédés cités ci-dessus dénués de défroissage mécanique aux déformations affectant le document dans son ensemble, tel qu'un pliage, mais sont sensibles aux variations modifiant le résultat des calculs de corrélation tels que des différences de luminosité, de contraste ou des déformations modifiant l'aspect d'une case comme le froissage ou les effets de perspective.

D'autres procédés, tels que celui décrit dans le brevet FR 2952218, proposent de réaliser un défroissage du document soumis par voie logicielle, afin de déterminer une image virtuelle du document déformé. De tels procédés nécessitent néanmoins une puissance de calcul importante et peuvent nécessiter un système plus complexe qu'un simple dispositif de prise de vue, par exemple afin de projeter sur le document froissé des mires nécessaires au calcul de défroissage logiciel.

Le brevet US 8 345 979 B2 concerne un procédé pour trouver un motif déformé dans une image en utilisant une pluralité de sous-motifs. En limitant avantageusement les plages de recherche de sous-motifs, la vitesse de recherche est améliorée et l'incidence des correspondances erronées est réduite. De plus, une méthode est fournie pour caractériser un motif déformé dans une image en utilisant un mappage qui modélise la déformation du motif.

La demande de brevet US 2010/239118 A1 concerne un procédé et un système pour effectuer une correction d'image de document au moyen d'un lecteur de document. Le procédé consiste à générer une image de document représentative d'un document présentant une déformation; décoder un motif optique intégré dans le document à partir de l'image de document pour déterminer une signature optique pour le document; identifier des données de classement de document associées à la signature numérique; recevoir les données de classement de document associées à la signature optique; et appliquer une technique de correction d'image à l'image de document sur la base des données de classement de document pour générer une image de document corrigée.

Il existe donc un besoin d'un procédé permettant d'identifier des signes sur un document froissé, à l'aide d'un dispositif d'imagerie simple ne comprenant ni défroissage mécanique, ni système de projection, sans être sensible aux variations lumineuses et aux déformations locales subies par le document.

### PRESENTATION DE L'INVENTION

Selon l'invention, il est proposé un procédé selon la revendication 1 et un dispositif selon la revendication 10. Des caractéristiques préférables de l'invention sont définies dans les revendications dépendantes. Tout mode de réalisation décrit ici qui n'entre pas dans le cadre des revendications doit être considéré comme des exemples.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un système d'identification selon un mode de réalisation de l'invention ;
- la figure 2 illustre un exemple de bulletin de loterie pour lequel le procédé selon l'invention est mis en œuvre ;
- les figures 3a, 3b et 3c illustrent les différents types de déformations physiques que peut subir un document pour lequel le procédé selon l'invention est mis en œuvre ;
- la figure 4 est un diagramme schématisant une mise en œuvre d'un procédé d'identification d'un signe selon l'invention ;
- les figures 5a et 5b illustrent un exemple de résultat d'un algorithme de segmentation pouvant être mis en œuvre par le procédé selon l'invention ;
- la figure 6 illustre un autre exemple de résultat d'un algorithme de segmentation de cases pouvant être mis en œuvre par le procédé selon l'invention ;
- la figure 7 illustre un exemple de descripteur d'une région de signe comprenant au moins un histogramme d'orientation de gradients locaux dans ladite région selon un mode de mise en œuvre de l'invention ;
- la figure 8 illustre l'impact, sur la précision de description d'une forme, du nombre de coefficients d'une transformation de Fourier utilisés pour la définition d'un descripteur de forme selon un mode de mise en œuvre de l'invention ;

### DESCRIPTION DETAILLEE

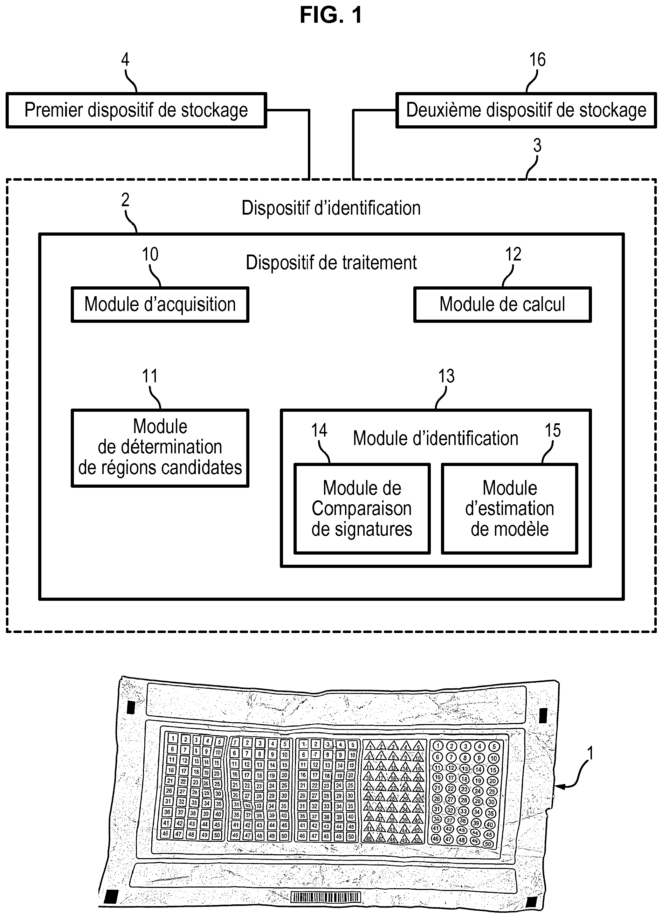

La présente invention concerne une mise en œuvre d'un procédé d'identification d'au moins un signe sur au moins une image d'un document susceptible d'être déformé 1 par un dispositif de traitement 2 compris dans un dispositif d'identification 3 tel que représenté en **figure 1** susceptible d'être relié à un premier dispositif de stockage 4.

De tels documents sont par exemple des documents d'identité tels que des passeports, cartes d'identités ou permis de conduire, des formulaires, des QCM d'examen ou des tickets de jeu, notamment des bulletins de loterie comprenant des cases à cocher. Le document à traiter comprend au moins un signe à identifier. Un tel signe peut être une figure géométrique telle qu'une case, un cercle ou une étoile, ou bien un caractère tel qu'un caractère alphanumérique, ou bien un groupe de caractères, ou bien encore un élément graphique tel qu'un motif spécifique d'un pays émetteur d'un document d'identité.

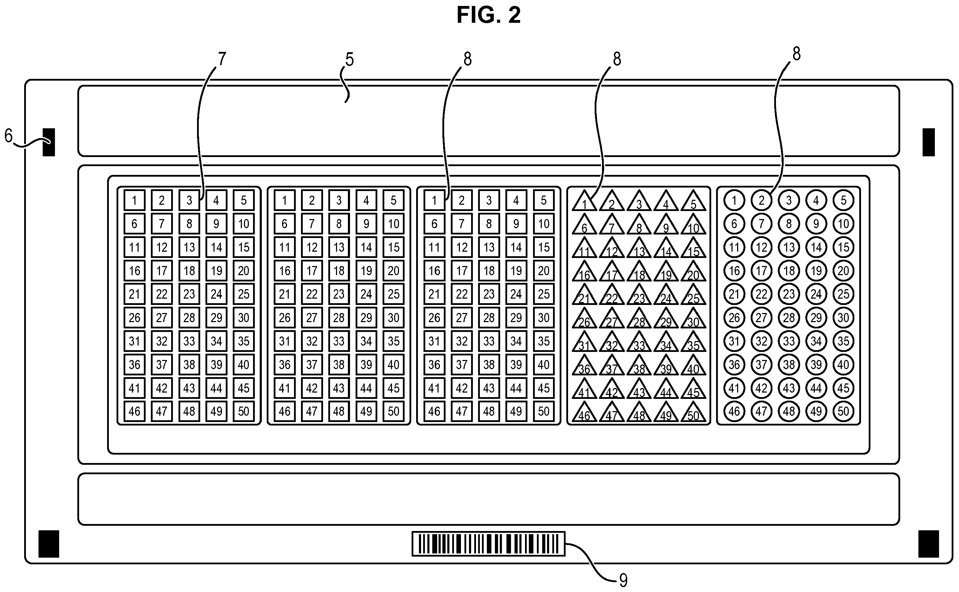

L'exemple d'un bulletin de loterie est illustré en **figure 2****.** Un tel bulletin peut comprendre des éléments de décor 5, des pavés de positionnement 6, des grilles 7, des cases 8 et un code jeu 9. On entendra par case un motif possédant un contour fermé quelconque, délimitant un espace destiné à être rempli par un utilisateur. Un tel contour peut être repéré par un trait ou par une différence de teinte entre le fond de la case et le reste du bulletin. Dans l'exemple illustré en figure 2, certaines cases possèdent un contour fermé carré et d'autres cases possèdent un contour fermé en étoile. Des cases peuvent également posséder un contenu tel qu'un chiffre comme illustré en figure 2.

Dans le cas d'un document tel qu'un passeport, les signes à identifier peuvent être des caractères ou chaînes de caractères alphanumériques consistant en des lettres, des chiffres ou des caractères spéciaux tels que des tirets, ou encore un élément graphique du document comme un motif spécifique du pays émetteur. L'identification dans un tel document, par comparaison à des signatures de référence, de signes tels que des suites de caractères récurrents d'un document à un autre, comme les libellés (nom, prénom...) des champs du document ou encore les lieux de naissance, permet d'identifier ces signes avec une robustesse plus importante que par des procédés d'OCR traditionnels.

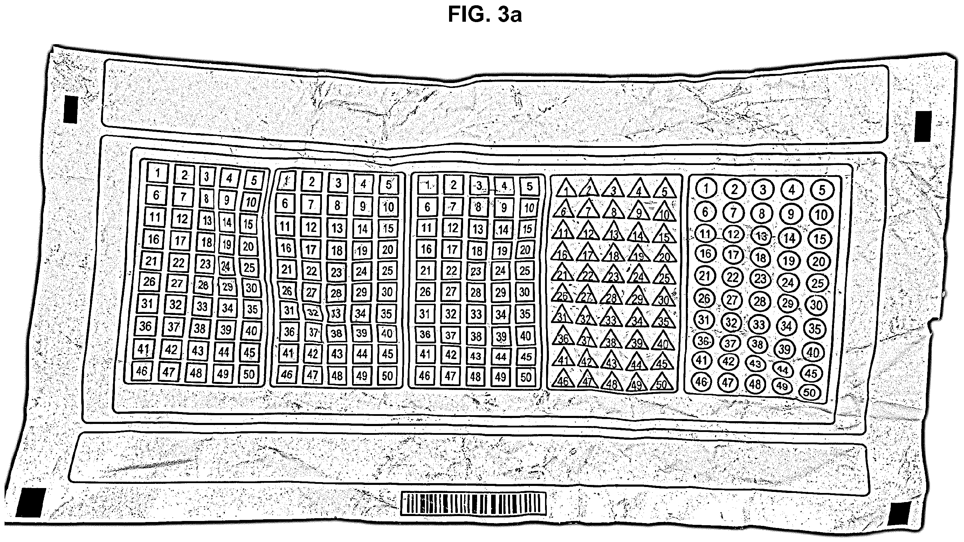

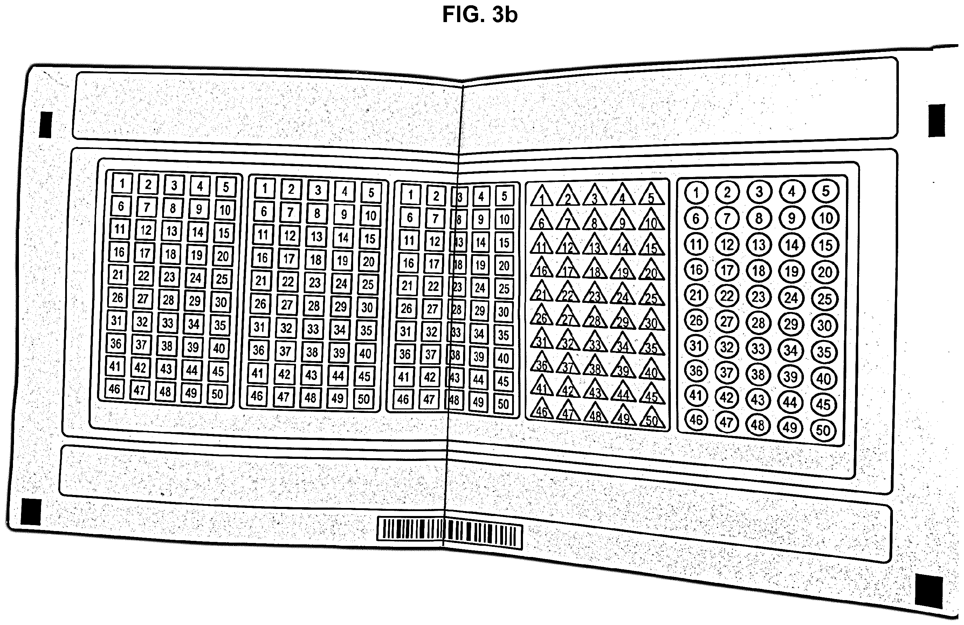

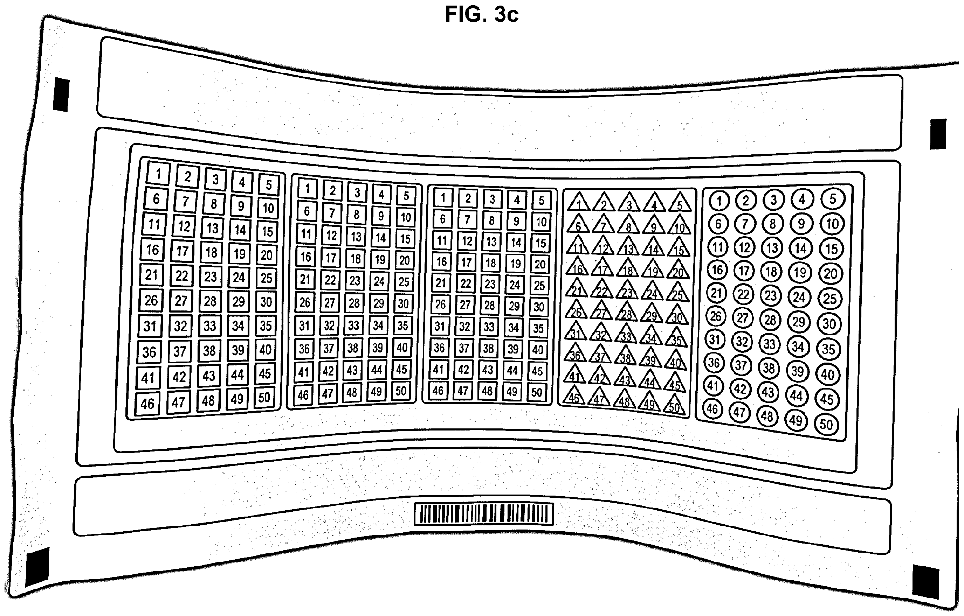

Un tel document peut présenter des déformations physiques de plusieurs types comme illustrées en **figures 3a à 3c** résultant de la manipulation du document par l'utilisateur. De telles déformations peuvent par exemple être des froissements comme illustrées en figure 3a, des pliures comme illustrées en figure 3b ou des courbures comme illustrées en figure 3c.

Le document susceptible d'être déformé est conforme à un modèle de document prédéfini. Un tel modèle de document définit une disposition géométrique des signes le composant, c'est-à-dire la position théorique des signes, caractères ou cases le constituant lorsque le document n'est pas déformé physiquement.

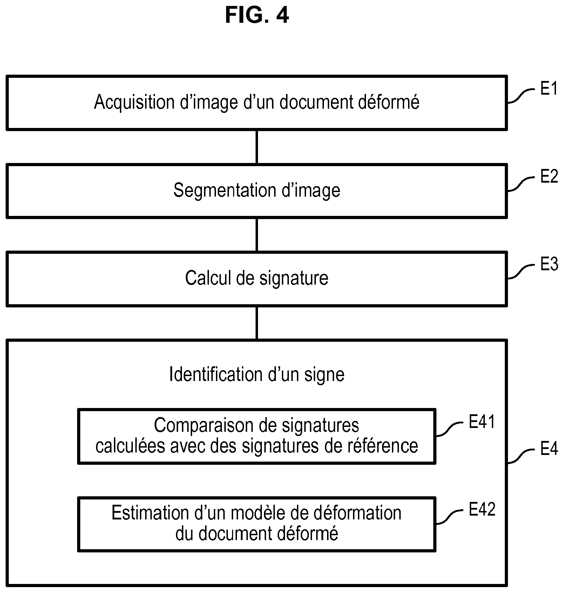

La figure 1 illustre un dispositif d'identification configuré pour identifier au moins un signe sur au moins une image d'un tel document en mettant en œuvre un procédé d'identification décrit en référence à la **figure 4****.** Ce procédé propose d'identifier ces signes sur l'au moins une image du document susceptible d'être déformé à partir d'une image acquise du document froissé, sans nécessiter de défroissage, et à partir d'un modèle de document préenregistré correspondant au document froissé.

Pour cela, le dispositif d'identification comprend un module d'acquisition 10 configuré pour acquérir une image numérique dudit document lors d'une étape d'acquisition E1. Un tel module d'acquisition peut comprendre un appareil de prise d'image tel qu'un appareil photo, une caméra ou un scanner. Ce module d'acquisition est configuré pour acquérir une image numérique du document, par exemple sous la forme d'une matrice de pixels, reproduisant les éventuelles déformations géométriques physiques du document. Une telle image peut également comprendre des déformations géométriques produites par la projection perspective réalisée par le module d'acquisition. Une telle acquisition nécessite uniquement de présenter le document à traiter dans le champ de prise de vue du module d'acquisition, et ne nécessite pas que le document soit mis en contact avec le dispositif d'identification, par exemple en étant inséré dans le dispositif ou posé à plat sur une surface d'imagerie.

Le dispositif d'identification comprend en outre un module de détermination de régions de signe candidates 11. Un tel module de détermination de régions de signe candidate est configuré pour déterminer dans l'image acquise au moins une sous-partie de l'image acquise, dite région de signe candidate, à l'aide d'un algorithme de segmentation d'image lors d'une étape de segmentation E2.

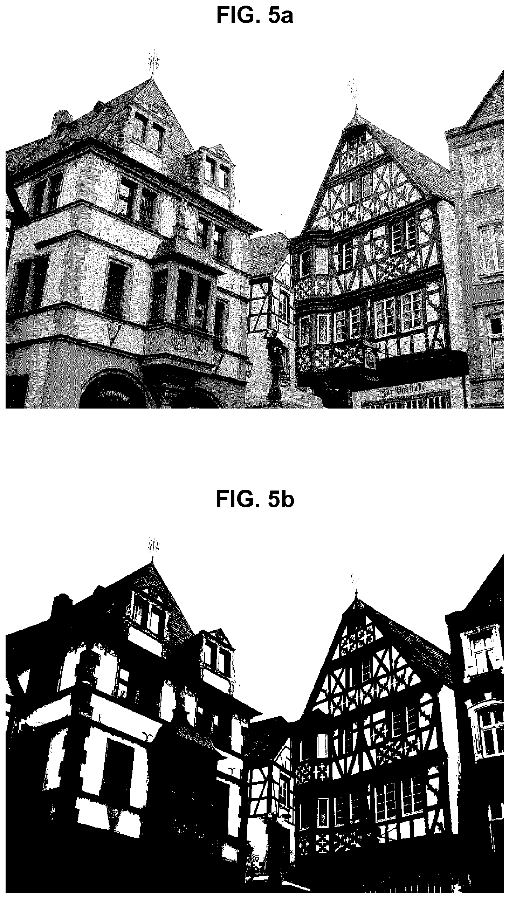

Un tel algorithme de segmentation peut mettre en œuvre un seuillage des pixels de l'image dudit document, par exemple en fonction de leur luminosité, de leur niveau de gris ou de leur couleur. Un tel seuillage peut être un seuillage simple comparant les pixels de l'image à un seul seuil et les séparant en deux groupes de pixels. Une telle segmentation peut être représentée sous la forme d'une image en noir et blanc telle que représentée en **figures 5a et 5b****.** L'algorithme de segmentation peut ensuite comprendre une analyse en composantes connexes afin de déterminer dans l'image des régions de pixels connexes de l'image présentant les mêmes caractéristiques. Deux pixels peuvent par exemple être considérés comme connexes s'ils sont voisins horizontalement ou verticalement dans la matrice des pixels de l'image pour la 4-connexité, ou également en diagonale pour la 8-connexité.

Un tel algorithme de segmentation peut également évaluer plusieurs hypothèses de segmentations, par exemple selon la méthode de l'arbre en composantes connexes, tel que décrit dans le document « A Baillard, C Berger, ... R Levillain, N Widynski, 2007, Algorithme de calcul de l'arbre des composantes avec applications à la reconnaissance des formes en imagerie satellitaire, 21° Colloque GRETSI (11-14). Chaque hypothèse de segmentation correspondant à un nœud de l'arbre peut alors être évaluée en fonction de différents critères relatifs à l'objet à segmenter, comme des critères colorimétriques ou des critères géométriques, estimés pour le groupe de pixels correspondant à la composante connexe représentée par le nœud concerné de l'arbre. Il est ainsi possible de sélectionner la meilleure hypothèse de segmentation selon les critères considérés, ou de considérer plusieurs hypothèses de segmentation. Les régions de pixels connexes déterminées dans l'image par l'algorithme de segmentation constituent les régions de signe candidates déterminées lors de l'étape de segmentation E2.

L'algorithme de segmentation peut également déterminer les régions de signe candidates à l'aide d'un algorithme de type MSER (« Maximally Stable Extremal Régions »), de segmentation par croissance de région, par fusion et décomposition, ou par détection de contour.

L'algorithme de segmentation peut également mettre en œuvre en complément des opérations citées ci-dessus des opérations de filtrage supplémentaires, par exemple afin de rehausser le contraste de l'image avant son traitement ou afin de réaliser une sélection des composantes connexes sur la base de critères géométriques telles que l'aire ou un rayon caractéristique, ou de critères colorimétriques afin de supprimer les régions de pixels connexes sans intérêt pour l'identification de signe.

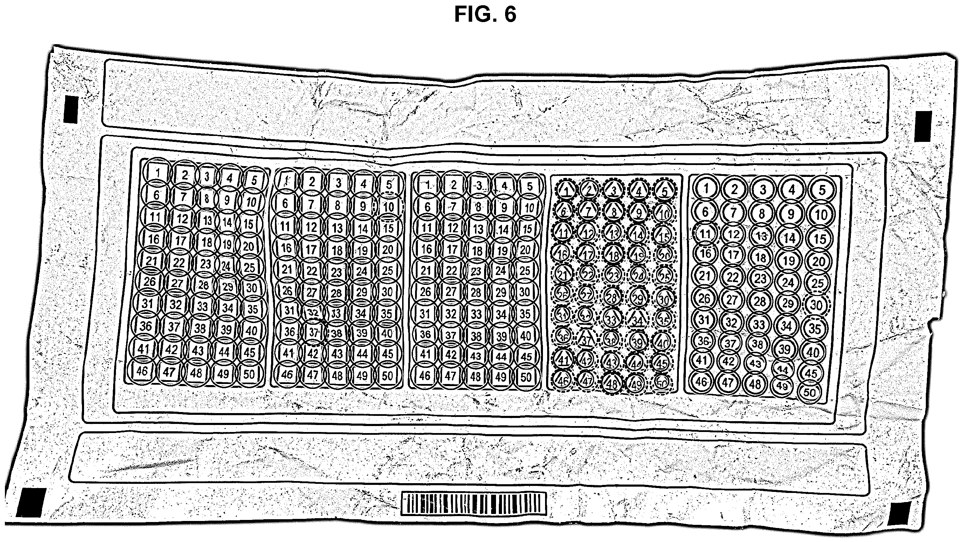

Dans le cas d'un document avec des cases, il est possible d'adapter l'algorithme de segmentation afin de tenter de détecter des régions de case candidates correspondant aux cases du document en fonction de leurs contours mais aussi en fonction de leur contenu, c'est-à-dire en fonction des pixels situés à l'intérieur des limites du contour d'une case, tel que représenté en **figure 6****.** Une telle approche peut particulièrement être mise en œuvre lorsque l'intérieur des cases présente une caractéristique particulière, telle qu'une couleur de remplissage distinctive ou un numéro de case dans le cas d'un ticket de loterie. Ceci aura pour effet de rendre plus robuste la détection des cases.

Un tel algorithme de segmentation peut conduire à la sélection de régions de signe candidates ne correspondant en fait pas à des signes, par exemple à des cases ou des caractères, mais correspondant à d'autres éléments du document tels que des éléments de décor, les pavés de positionnement d'un ticket de loterie ou des salissures déposées sur la surface du document. Les régions de signes candidates ne sont pas nécessairement disjointes et certains pixels ou groupes de pixels peuvent appartenir à plusieurs régions de signe candidates.

Le dispositif d'identification comprend également un module de calcul 12 configuré pour calculer, lors d'une étape de calcul E3, une signature pour chaque région de signe candidate déterminée lors de l'étape de segmentation E2. Une telle signature d'une région peut comprendre une information relative à la localisation de ladite région dans l'image acquise ainsi qu'un descripteur de région relatif à des caractéristiques locales de l'image dans ladite région. Une telle signature peut en outre comprendre une information d'échelle.

Le rôle d'un tel descripteur d'une région est de décrire les caractéristiques locales de ladite région de manière synthétique. Un tel descripteur est préférentiellement choisi de manière à être invariant à des changements d'échelle et à des rotations et à être robuste vis-à-vis de perturbations de la géométrie ou des caractéristiques photométriques de l'image dans la région telles qu'une transformation affine locale, un changement de point de vue, un ajout de bruit, une modification de l'illumination etc... Une telle invariance peut être obtenue par normalisation de l'image dans les régions candidates déterminées ou bien par normalisation des descripteurs eux-mêmes, généralement au prix d'une perte d'information.

De tels descripteurs permettent de distinguer efficacement les régions candidates les unes des autres, de façon robuste aux perturbations subies dans l'acquisition de l'image du document. Ces descripteurs permettent ainsi de mettre facilement les régions candidates en correspondance avec des signes d'un modèle de documents comprenant divers signes de signatures connues stockées dans un dispositif de stockage, avec une probabilité d'erreur faible.

Le descripteur d'une région de signe peut être relatif à une information de contour et/ou de contenu de ladite région de signe. Un tel descripteur peut être pertinent notamment lorsque les signes à identifier sont des cases.

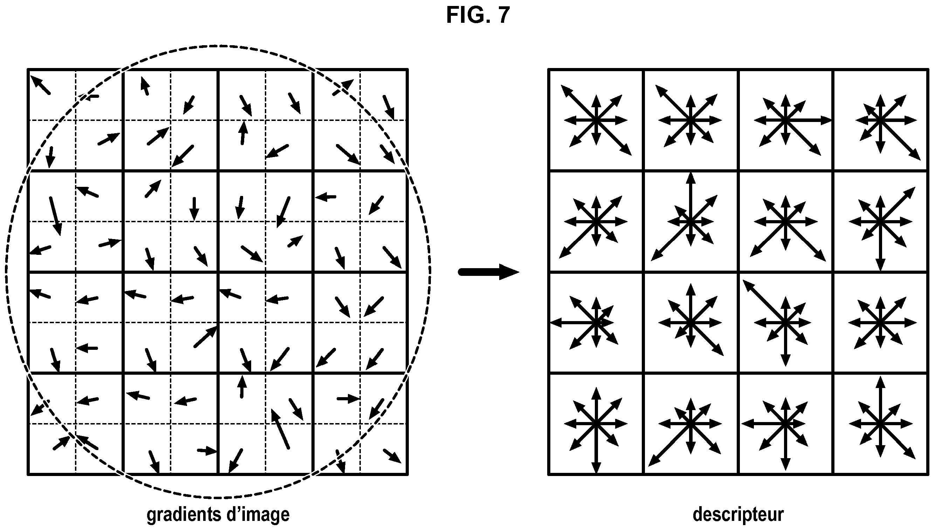

Le descripteur d'une région de signe peut notamment être de type descripteur de région, c'est-à-dire prenant en compte des informations de toute la région de signe dont son contenu, et comprendre au moins un histogramme d'orientation de gradients locaux dans ladite région tel que représenté en **figure 7****.** Un tel histogramme présente selon différentes directions le cumul des gradients locaux selon chacune de ces directions dans la région candidate. Le calcul du descripteur d'une région peut s'accompagner d'une subdivision de cette région tel que présenté dans le document « Lowe D. G., 1999, Object recognition from local scale-invariant features, Proceedings of the International Conference on Computer Vision, vol. 2, p. 1150-1157».

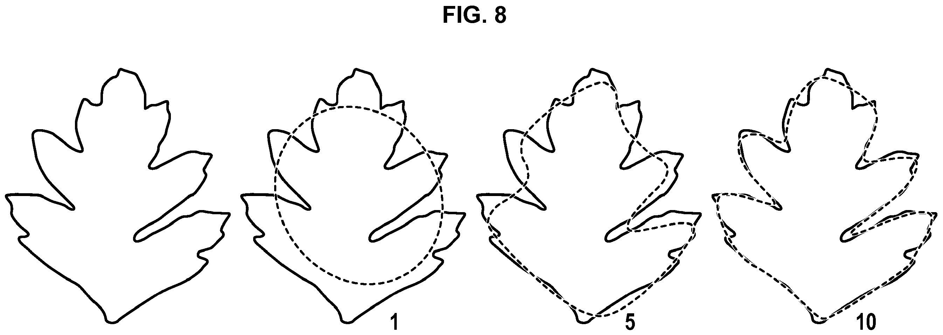

Le descripteur d'une région de signe peut également être de type descripteur de forme et comprendre un descripteur de forme tel qu'un descripteur de Fourier de ladite forme, comme décrit dans le document « Burger W. & Burge M.J., 2013, Fourier shape descriptors, principles of digital image processing, 169-227, Springer London » , ou un descripteur de contexte de forme (« « shape context descriptor ») tel que décrit dans le document « Belongie S., Malik J. & Puzicha J., 2002, Shape matching and object recognition using shape contexts, Pattern Analysis and Machine Intelligence, IEEE Transactions on, 24(4), 509-522 ». Ce type de descripteur peut être intéressant avec des signes identifiables avec peu d'ambiguïté grâce à leur forme comme les codes à barres ou OCR unidimensionnel. Un tel descripteur de Fourier mémorise les coefficients d'une transformation de Fourier décrivant de manière plus ou moins approchée la forme de la région. Plus le nombre de coefficients mémorisés est important, plus la forme est décrite de manière précise, comme représenté en **figure 8****,** au prix d'une perte de robustesse.

Des descripteurs spécifiques peuvent être employés lorsque les signes à identifier sont des figures géométriques caractérisées exclusivement par leur contour, telles que des pavés de positionnement de certains tickets de jeux. Les descripteurs employés peuvent alors ne pas prendre en compte les informations de contenu d'une région de signe candidate et être principalement basés sur le contour d'une telle région.

Le dispositif d'identification comprend enfin un module d'identification 13 d'au moins un signe, configuré pour identifier au moins un signe sur au moins une image du document lors d'une étape d'identification E4 à partir des signatures calculées lors de l'étape de calcul E3. Pour ce faire, le module d'identification comprend un module de comparaison 14 configuré pour comparer, lors d'une étape de comparaison E41, des signatures de régions de signe candidates calculées lors de l'étape de calcul E3 avec des signatures de référence stockées dans le premier dispositif de stockage. Ces signatures de référence sont relatives à des régions de signe de divers modèles de documents. Le module de comparaison tente ainsi de trouver pour chaque région de signe candidate une région d'un modèle du document présentant une signature proche de celle de la région candidate. Si une telle mise en correspondance avec une région de signe de référence est réalisée, la région de signe candidate est considérée comme identifiée et correspondante au signe de la région de signe de référence. Une telle mise en correspondance est dénommée « amer ».

Le module d'identification comprend en outre un module d'estimation de modèle 15 configuré pour estimer, lors d'une étape d'estimation E42, un modèle de déformation géométrique dudit document en fonction de ladite comparaison réalisée par le module de comparaison 14.

Un tel modèle de déformation peut être :
- un modèle affine déterminant une application affine reliant les régions de signe candidates et les régions de signe de référence du document, telle qu'une translation, une rotation ou une homothétie. Un tel modèle permet de préserver les alignements de points et les ratios de distances entre des points du document,
- un modèle homographique déterminant une application homographique reliant les régions de signe candidates et les régions de signe de référence du document. Un tel modèle permet de faire correspondre un plan d'une surface plane vu par une caméra avec le plan de la même surface dans une autre image,
- un modèle d'interpolation déterminé à l'aide d'un algorithme de pondération par distance inverse, tel que proposé dans le document « Franke R., 1982, Scattered data interpolation : tests of some methods, mathematical of computation, 38(157), 181-200 », et/ou d'interpolation par splines.

L'utilisation de tels modèles de déformation et la détermination des amers en fonction de tels modèles permet de ne pas limiter le procédé à la prise en compte de déformations simples telles que des déformations de perspective dues à un mauvais positionnement du document traité, par exemple dans un plan incliné par rapport au plan de prise d'image. Ainsi, le procédé décrit permet de prendre en compte des déformations bien plus variées et bien plus complexes telles que des déformations locales dues au froissage du document.

Un tel modèle peut être déterminé en mettant en œuvre successivement au moins deux algorithmes et/ou applications parmi les exemples cités ci-dessus. Différents algorithmes peuvent ainsi être testés afin de déterminer le plus adapté ou la combinaison la plus adaptée pour décrire la déformation du document. Différents algorithmes peuvent être adaptés et enregistrés de sorte à ce qu'au moins un algorithme corresponde à chaque type de déformation tel que le froissement, le pliage, la courbure etc...

L'étape d'estimation E42 et l'étape de comparaison E41 sont réalisées de manière conjointe de manière à ce que la détermination des amers soit réalisée en fonction du modèle de déformation correspondant.

Le modèle de déformation est déterminé de manière globale à partir de toutes les combinaisons d'amers déterminés. La détermination des amers corrects peut alors être réalisée de façon à minimiser un critère défini en fonction du modèle de déformation choisi.

Lors de l'étape d'identification de signes E4, le modèle de déformation est déterminé de manière itérative. Pour ce faire, pour chaque région de signe candidate déterminée à l'étape de segmentation E2, l'étape de comparaison E41 peut alors comprendre :
- une comparaison de la signature calculée pour ladite région avec lesdites signatures de référence stockées dans ledit premier dispositif de stockage,
- une mise en correspondance de la signature calculée avec une signature de référence en fonction de ladite comparaison et d'un modèle de déformation géométrique du document courant stocké dans un deuxième dispositif de stockage 16 relié audit dispositif de traitement de données 2, de sorte à identifier ladite région de signe candidate, et l'étape d'estimation E42 comprend
- une estimation d'un nouveau modèle de déformation géométrique dudit document à partir dudit modèle de déformation géométrique courant et de ladite correspondance,
- un stockage dans le deuxième dispositif de stockage dudit nouveau modèle de déformation en tant que modèle de déformation courant.

Chaque mise en correspondance d'une région de signe candidate avec une région de signe de référence donne alors lieu à une mise à jour du modèle de déformation courant. Chaque mise en correspondance peut être réalisée de façon à minimiser des indicateurs de mauvaise association, de tels indicateurs pouvant être calculés à partir du modèle de déformation courant en fonction de la cohérence entre l'association et le modèle courant, et/ou de la similarité des descripteurs des régions mises en correspondance. Si, pour une région de signe candidate donnée, aucune région de signe de référence ne permet d'obtenir un indicateur inférieur à un seuil d'acceptation prédéterminé, la région de signe candidate peut être écartée. Les associations possibles pour cette région de signe candidate semblent alors difficilement compatibles avec le modèle de déformation courant et cette région de signe candidate correspond alors probablement à une région ne comprenant aucun signe et ne doit pas être mise en correspondance avec une région de signe d'un modèle de document. Cela peut par exemple être le cas pour un ticket de loterie si la région de signe candidate correspond à un élément de décoration et non à une case.

Lors d'un tel traitement itératif, les premières régions de signe candidates peuvent à titre d'exemple être les régions de signe localisées à l'emplacement des pavés de positionnement d'un modèle de référence. Les régions de signe candidates suivantes peuvent être traitées dans un ordre aléatoire ou bien de proche en proche, en fonction de leur proximité avec une région de signe candidate déjà traitée.

Une telle mise en œuvre permet ainsi d'identifier dans l'image d'un document susceptible d'être déformé des signes tels que des caractères ou des cases, à partir d'une image du document éventuellement prise à distance, sans nécessiter un défroissage mécanique ni logiciel, sans que cette identification ne soit sensible aux conditions de prise de vue de l'image du document.

## Revendications

1. Procédé d'identification d'au moins un signe sur au moins une image d'un document susceptible d'être déformé (1),
ledit procédé étant mis en œuvre par un dispositif de traitement de données (2) susceptible d'être relié à un premier dispositif de stockage (4), ledit procédé comprenant des étapes de :
- acquisition (E1) de ladite au moins une image numérique dudit document
- détermination (E2) dans l'image acquise d'au moins une sous-partie de l'image acquise, dite région de signe candidate, à l'aide d'un algorithme de segmentation d'image,
- pour chaque région de signe candidate, calcul (E3) d'une signature comprenant une information relative à la localisation dans l'image acquise de ladite région de signe candidate et un descripteur de région relatif à des caractéristiques locales de l'image dans ladite région,
- identification (E4) d'au moins un signe sur ladite au moins une image dudit document à partir des signatures calculées,
ladite étape d'identification comprenant conjointement une comparaison (E41) des signatures calculées avec des signatures de références relatives à des régions de signes de modèles de documents stockées dans le premier dispositif de stockage (4), ladite comparaison étant réalisée en fonction d'un modèle de déformation géométrique dudit document, et une estimation (E42) en fonction de ladite comparaison dudit modèle de déformation géométrique,
dans lequel pour chaque région de signe candidate :
- ladite étape de comparaison (E41) comprend :
- une comparaison de la signature calculée pour ladite région avec lesdites signatures de référence stockées dans ledit premier dispositif de stockage,
- une mise en correspondance de la signature calculée avec une signature de référence en fonction de ladite comparaison et d'un modèle de déformation géométrique du document courant stocké dans un deuxième dispositif de stockage (16) relié audit dispositif de traitement de données (2), de sorte à identifier ladite région de signe candidate,
- et ladite étape d'estimation (E42) comprend :
- une estimation d'un nouveau modèle de déformation géométrique dudit document à partir dudit modèle de déformation géométrique courant et de ladite correspondance,
- un stockage dans le deuxième dispositif de stockage (16) dudit nouveau modèle de déformation en tant que modèle de déformation courant.

2. Procédé d'identification selon la revendication 1, dans lequel ledit document est un ticket de jeux ou un document d'identité.

3. Procédé d'identification selon l'une des revendications précédentes, dans lequel un signe à identifier est une figure géométrique, un caractère, un groupe de caractères ou un élément graphique.

4. Procédé d'identification selon l'une des revendications précédentes, dans lequel un signe à identifier est un motif délimité par un contour fermé.

5. Procédé d'identification selon l'une des revendications 2 à 4, dans lequel un signe à identifier est une case, un cercle, une étoile ou un caractère alphanumérique ou un motif spécifique d'un pays émetteur du document d'identité.

6. Procédé d'identification selon l'une des revendications précédentes, dans lequel une signature comprend en outre une information d'échelle.

7. Procédé d'identification selon l'une des revendications précédentes, dans lequel un descripteur d'une région de signe est relatif à une information de contour et/ou de contenu de ladite région de signe.

8. Procédé d'identification selon l'une des revendications précédentes, dans lequel le modèle de déformation est déterminé à l'aide d'un algorithme de pondération par distance inverse ou d'interpolation par splines.

9. Produit programme d'ordinateur comprenant des instructions de code pour l'exécution d'un procédé d'identification selon l'une quelconque des revendications précédentes lorsque ce programme est exécuté par un processeur.

10. Dispositif d'identification (3) d'au moins un signe sur au moins une image d'un document susceptible d'être déformé, ledit dispositif comprenant un dispositif de traitement de données (2) susceptible d'être relié à un premier dispositif de stockage (4) comprenant :
- un module d'acquisition (10) de ladite au moins une image numérique dudit document ;
- un module de détermination (11) dans l'image acquise d'au moins une sous-partie de l'image acquise, dite région de signe candidate, à l'aide d'un algorithme de segmentation d'image,
- un module de calcul (12) d'une signature pour chaque région de signe candidate comprenant une information relative à la localisation dans l'image acquise de ladite région de signe candidate et un descripteur de région relatif à des caractéristiques locales de l'image dans ladite région,
- un module d'identification (13) d'au moins un signe sur ladite au moins une image dudit document à partir des signatures calculées,
ledit module d'identification (13) comprenant conjointement un module de comparaison (14) configuré pour comparer, lors d'une étape de comparaison (E41), des signatures calculées avec des signatures de référence relatives à des régions de signe de modèles de documents stockées dans ledit premier dispositif de stockage, en fonction d'un modèle de déformation géométrique dudit document, et un module d'estimation (15) conjointe configuré pour estimer, lors d'une étape d'estimation (E42), ledit modèle de déformation géométrique en fonction de ladite comparaison,
dans lequel pour chaque région de signe candidate :
- ladite étape de comparaison (E41) comprend :
- une comparaison de la signature calculée pour ladite région avec lesdites signatures de référence stockées dans ledit premier dispositif de stockage,
- une mise en correspondance de la signature calculée avec une signature de référence en fonction de ladite comparaison et d'un modèle de déformation géométrique du document courant stocké dans un deuxième dispositif de stockage (16) relié audit dispositif de traitement de données (2), de sorte à identifier ladite région de signe candidate,
- et ladite étape d'estimation (E42) comprend :
- une estimation d'un nouveau modèle de déformation géométrique dudit document à partir dudit modèle de déformation géométrique courant et de ladite correspondance,
- un stockage dans le deuxième dispositif de stockage (16) dudit nouveau modèle de déformation en tant que modèle de déformation courant.

## Patentansprüche

1. Verfahren zur Identifizierung von mindestens einem Zeichen auf mindestens einem Bild eines Dokuments, das verformt sein kann (1),
wobei das Verfahren von einer Datenverarbeitungsvorrichtung (2) durchgeführt wird, die mit einer ersten Speichervorrichtung (4) verbunden sein kann, wobei das Verfahren die Schritte umfasst:
- Erfassen (E1) des mindestens einen digitalen Bildes des Dokuments,
- Bestimmen (E2), in dem erfassten Bild, mindestens eines Teilabschnitts des erfassten Bildes, bezeichnet als Kandidatenzeichenregion, mit Hilfe eines Bildsegmentierungsalgorithmus,
- für jede Kandidatenzeichenregion, Berechnen (E3) einer Signatur, die eine Information umfasst, die sich auf die Lokalisierung der Kandidatenzeichenregion im erfassten Bild bezieht, und eines Region-Deskriptors, der sich auf lokale Merkmale des Bildes in der Region bezieht,
- Identifizieren (E4) mindestens eines Zeichens auf dem mindestens einen Bild des Dokuments auf der Basis der berechneten Signaturen,
wobei der Identifizierungsschritt gemeinsam einen Vergleich (E41) der berechneten Signaturen mit Referenzsignaturen umfasst, die sich auf Zeichenregionen von Modellen von Dokumenten beziehen, die in der ersten Speichervorrichtung (4) gespeichert sind, wobei der Vergleich in Abhängigkeit von einem geometrischen Verformungsmodell des Dokuments durchgeführt wird, und eine Schätzung (E42) in Abhängigkeit von dem Vergleich des geometrischen Verformungsmodells,
wobei für jede Kandidatenzeichenregion:
- der Vergleichsschritt (E41) umfasst:
- einen Vergleich der für die Region berechneten Signatur mit den in der ersten Speichervorrichtung gespeicherten Referenzsignaturen,
- eine Zuordnung der berechneten Signatur zu einer Referenzsignatur in Abhängigkeit von dem Vergleich und eines geometrischen Verformungsmodells des laufenden Dokuments, das in einer zweiten Speichervorrichtung (16) gespeichert ist, die mit der Datenverarbeitungsvorrichtung (2) verbunden ist, so dass die Kandidatenzeichenregion identifiziert wird,
- und der Schätzschritt (E42) umfasst:
- eine Schätzung eines neuen geometrischen Verformungsmodells des Dokuments auf der Basis des laufenden geometrischen Verformungsmodells und der Zuordnung,
- ein Speichern des neuen Verformungsmodells als laufendes Verformungsmodell in der zweiten Speichervorrichtung (16).

2. Identifizierungsverfahren nach Anspruch 1, wobei das Dokument ein Ticket für ein Spiel oder ein Identitätsdokument ist.

3. Identifizierungsverfahren nach einem der vorangehenden Ansprüche, wobei ein zu identifizierendes Zeichen eine geometrische Figur, ein Schriftzeichen, eine Gruppe von Schriftzeichen oder ein grafisches Element ist.

4. Identifizierungsverfahren nach einem der vorangehenden Ansprüche, wobei ein zu identifizierendes Zeichen ein von einer geschlossenen Kontur begrenztes Motiv ist.

5. Identifizierungsverfahren nach einem der Ansprüche 2 bis 4, wobei ein zu identifizierendes Zeichen ein Kästchen, ein Kreis, ein Stern oder ein alphanumerisches Schriftzeichen oder ein spezielles Motiv eines das Identitätsdokument ausstellenden Landes ist.

6. Identifizierungsverfahren nach einem der vorangehenden Ansprüche, wobei eine Signatur ferner eine Skalierungsinformation umfasst.

7. Identifizierungsverfahren nach einem der vorangehenden Ansprüche, wobei sich ein Deskriptor einer Zeichenregion auf eine Kontur- und/oder Contentinformation der Zeichenregion bezieht.

8. Identifizierungsverfahren nach einem der vorangehenden Ansprüche, wobei das Verformungsmodell mit Hilfe eines inversen Distanzwichtungs- oder Spline-Interpolationsalgorithmus bestimmt wird.

9. Rechnerprogrammprodukt, umfassend Codebefehle für die Ausführung eines Identifizierungsverfahrens nach einem der vorangehenden Ansprüche, wenn dieses Programm von einem Prozessor ausgeführt wird.

10. Vorrichtung zur Identifizierung (3) von mindestens einem Zeichen auf mindestens einem Bild eines Dokuments, das verformt sein kann,
wobei die Vorrichtung eine Datenverarbeitungsvorrichtung (2) umfasst, die mit einer ersten Speichervorrichtung (4) verbunden sein kann, umfassend:
- ein Erfassungsmodul (10) des mindestens einen digitalen Bildes des Dokuments,
- ein Bestimmungsmodul (11), in dem erfassten Bild, mindestens eines Teilabschnitts des erfassten Bildes, bezeichnet als Kandidatenzeichenregion, mit Hilfe eines Bildsegmentierungsalgorithmus,
- ein Berechnungsmodul (12) einer Signatur für jede Kandidatenzeichenregion, umfassend eine Information, die sich auf die Lokalisierung der Kandidatenzeichenregion im erfassten Bild bezieht, und einen Region-Deskriptor, der sich auf lokale Merkmale des Bildes in der Region bezieht,
- ein Identifizierungsmodul (13) mindestens eines Zeichens auf dem mindestens einen Bild des Dokuments auf der Basis der berechneten Signaturen,
wobei das Identifizierungsmodul (13) gemeinsam ein Vergleichsmodul (14) umfasst, das ausgelegt ist, um bei einem Vergleichsschritt (E41) berechnete Signaturen mit Referenzsignaturen zu vergleichen, die sich auf Zeichenregionen von Modellen von Dokumenten beziehen, die in der ersten Speichervorrichtung gespeichert sind, in Abhängigkeit von einem geometrischen Verformungsmodell des Dokuments, und ein gemeinsames Schätzmodul (15), das ausgelegt ist, um bei einem Schätzschritt (E42) das geometrische Verformungsmodell in Abhängigkeit von dem Vergleich zu schätzen,
wobei für jede Kandidatenzeichenregion:
- der Vergleichsschritt (E41) umfasst:
- einen Vergleich der für die Region berechneten Signatur mit den in der ersten Speichervorrichtung gespeicherten Referenzsignaturen,
- eine Zuordnung der berechneten Signatur zu einer Referenzsignatur in Abhängigkeit von dem Vergleich und eines geometrischen Verformungsmodells des laufenden Dokuments, das in einer zweiten Speichervorrichtung (16) gespeichert ist, die mit der Datenverarbeitungsvorrichtung (2) verbunden ist, so dass die Kandidatenzeichenregion identifiziert wird,
- und der Schätzschritt (E42) umfasst:
- eine Schätzung eines neuen geometrischen Verformungsmodells des Dokuments auf der Basis des laufenden geometrischen Verformungsmodells und der Zuordnung,
- ein Speichern des neuen Verformungsmodells als laufendes Verformungsmodell in der zweiten Speichervorrichtung (16).

## Claims

1. Method for identifying at least one sign on at least one image of a document that can be distorted (1),
said method being implemented by a data processing device (2) able to be connected to a first storage device (4), said method comprising steps of:
- acquiring (E1) said at least one digital image of said document,
- determining (E2) in the acquired image at least one sub-part of the acquired image, referred to as candidate sign region, using an image segmentation algorithm,
- for each candidate sign region, calculating (E3) a signature comprising information relating to the location in the acquired image of said candidate sign region and a region descriptor relating to local characteristics of the image in said region,
- identifying (E4) at least one sign on said at least one image of said document from the calculated signatures,
said identification step comprising jointly a comparison (E41) of the calculated signatures with reference signatures relating to sign regions of document models stored in the first storage device (4), said comparison being carried out according to a geometric distortion model of said document, and an estimation (E42) according to said comparison of said geometric distortion model,
wherein for each candidate sign region:
- said comparison step (E41) comprises:
- a comparison of the signature calculated for said region with said reference signatures stored in said first storage device,
- a matching of the calculated signature with a reference signature according to said comparison and to a geometric distortion model of the current document stored in a second storage device (16) connected to said data processing device (2), in such a way as to identify said candidate sign region,
- and said estimation step (E42) comprises:
- an estimating of a new geometric distortion model of said document from said current geometric distortion model and said matching,
- a storing in the second storage device (16) of said new distortion model as a current distortion model.

2. Method of identification according to claim 1, wherein said document is a game ticket or an identity document.

3. Method of identification according to any of the preceding claims, wherein a sign to be identified is a geometric figure, a character, a group of characters or a graphical element.

4. Method of identification according to any of the preceding claims, wherein a sign to be identified is a pattern delimited by a closed contour.

5. Method of identification according to any of claims 2 to 4, wherein a sign to be identified is a box, a circle, a star or an alphanumeric character or a specific pattern of a country issuing the identity document.

6. Method of identification according to any of the preceding claims, wherein a signature further comprises scale information.

7. Method of identification according to any of the preceding claims, wherein a descriptor of a sign region relates to information on the contour and/or on the content of said sign region.

8. Method of identification according to any of the preceding claims, wherein the distortion model is determined using an inverse distance weighting algorithm or a splines interpolation algorithm.

9. Computer program product comprising code instructions for the executing of a method of identification according to any one of the preceding claims when this program is executed by a processor.

10. Device for identifying (3) at least one sign on at least one image of a document that can be distorted, said device comprising a data processing device (2) able to be connected to a first storage device (4) comprising:
- a module for acquiring (10) said at least one digital image of said document;
- a module for determining (11) in the acquired image at least one sub-part of the acquired image, referred to as candidate sign region, using an image segmentation algorithm,
- a module for calculating (12) a signature for each candidate sign region comprising information relating to the location in the acquired image of said candidate sign region and a region descriptor relating to local characteristics of the image in said region,
- a module for identifying (13) at least one sign on said at least one image of said document using the calculated signatures,
said module for identifying (13) jointly comprising a module for comparing (14) configured to compare, during a comparison step (E41), calculated signatures with reference signatures relating to sign regions of document models stored in said first storage device, according to a geometric distortion model of said document, and a module for the joint estimating (15) configured to estimate, during an estimation step (E42), said geometric distortion model according to said comparison,
wherein for each candidate sign region:
- said comparison step (E41) comprises:
- a comparison of the signature calculated for said region with said reference signatures stored in said first storage device,
- a matching of the calculated signature with a reference signature according to said comparison and to a geometric distortion model of the current document stored in a second storage device (16) connected to said data processing device (2), in such a way as to identify said candidate sign region,
- and said estimation step (E42) comprises:
- an estimating of a new geometric distortion model of said document from said current geometric distortion model and said matching,
- a storing in the second storage device (16) of said new distortion model as a current distortion model.
